# EUROPEAN PATENT APPLICATION

(11) **EP 4 440 116 A1**
(43) Date of publication of application: **02.10.2024**
(21) Application number: 24164540.7
(22) Date of filing: 19.03.2024
(51) Int. Cl.: H04N 21/2187, H04N 21/234, H04N 21/25, H04N 21/2665, H04N 21/431, H04N 21/462, H04N 21/81, H04N 21/854

(54) **A DEVICE, COMPUTER PROGRAM AND METHOD**

(30) Priority: 29.03.2023 GB 202304606
(71) Applicant: Sony Group Corporation, Tokyo 108-0075 (JP)
(72) Inventor: PORTER, Robert Mark Stefan, Basingstoke, RG22 4SB (GB); PRAYLE, Paul Edward, Basingstoke, RG22 4SB (GB); LEATHERS-SMITH, William, Basingstoke, RG22 4SB (GB)
(74) Representative: D Young & Co LLP

(57) **Abstract**

A method for outputting a video stream is described. This method comprises: receiving one or more video streams of a real life event; selecting one of the one or more video streams; automatically generating an annotation for the selected one video stream based upon the content of the selected video stream; and outputting the annotation with the selected one of the one or more video streams.

## Description

### BACKGROUND

### Field of the Disclosure

The present technique relates to a device, computer program and method.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

Typically, professionally produced video content of an event is produced from multiple audio/video streams captured by multiple cameras (and associated microphones). These are mixed together by an operator who decides which camera feed to use in the program stream.

The logistics of providing an operator to produce a program stream of an event means that only large events are suitable for multiple camera streams. This means that smaller events with smaller audiences are not typically televised.

It is an aim of the disclosure to address this issue.

### SUMMARY

According to embodiments of the disclosure, there is provided a device for outputting a video stream comprising: circuitry configured to: receive one or more video streams of a real life event; select one of the one or more video streams; automatically generate an annotation for the selected one video stream based upon the content of the selected video stream; and output the annotation with the selected one of the one or more video streams.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows a system including a device according to embodiments of the disclosure;
Figure 2 shows i) video feeds 270A-270C from the cameras in the system of Figure 1 and ii) a video stream output 240 from the device according to embodiments of the disclosure;
Figures 3 and 4 show tables explaining metrics used to annotate the video stream output from the device according to embodiments of the disclosure;
Figure 5 shows a table explaining a rating metric used to annotate the video stream output from the device according to embodiments of the disclosure;
Figure 6 shows a flowchart explaining embodiments of the disclosure performed by circuitry within the device;
Figure 7 shows a flowchart explaining the selection of the output video feed in step 810;
Figure 8 shows a flowchart describing the selection of the annotation;
Figure 9 shows the annotation of the output video feed with the social media metrics;
Figure 10 shows the annotation of the output video feed with distance metrics applied;
Figure 11 shows a webpage 1110 which is provided on a display 1100 according to further embodiments of the disclosure;
Figure 12 shows a server 1200 which is used to host the webpage 1110;
Figure 13 shows the database stored in storage 1240; and
Figure 14 shows a flowchart 1400 explaining embodiments of the present disclosure.

### DESCRIPTION OF THE EMBODIMENTS

Referring now to the drawings, wherein like reference numerals designate identical or corresponding parts throughout the several views.

Numerous modifications and variations of the present disclosure are possible in light of the above teachings. It is therefore to be understood that within the scope of the appended claims, the disclosure may be practiced otherwise than as specifically described herein.

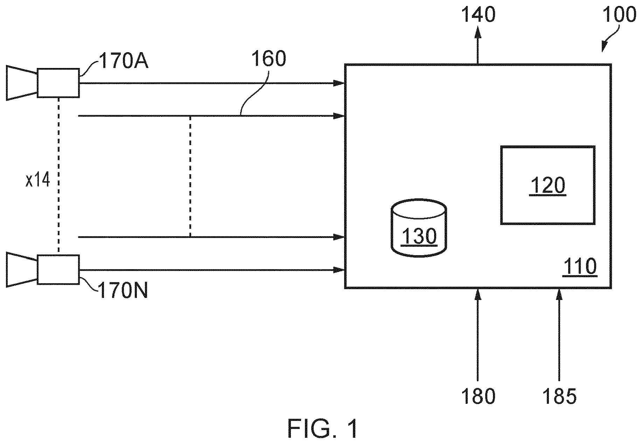

Figure 1 shows a system 100 including a device 110 according to embodiments of the disclosure. The system 100 also includes one or more video feeds 160 captured by one or more cameras 170A-170N. Although any number of video feeds and cameras are envisaged, in embodiments described herein, there are 14 cameras and video feeds. The cameras 170A-170N may be any kind of cameras capable of capturing video content. One or more of the cameras 170A-170N may have one or more integrated microphone capable of capturing audio. Of course, audio may be captured by one or more separate microphone. This audio stream may be provided with the captured video meaning that the feeds are audio/video feeds.

The device 110 includes circuitry 120 that is configured to perform embodiments of the disclosure. This circuitry 120 may be semiconductor circuitry set up as an Application Specific Integrated Circuit (ASIC) and/or as circuitry configured to operate under the control of software. In Figure 1, the circuitry 120 includes a processor that operates under the control of software that is stored in storage 130. The software contains computer readable instructions which, when loaded onto the processor configures the processor to perform a method according to embodiments. The storage 130 may be any kind of suitable storage 130 such as solid-state storage or optically readable storage.

The device 110 may receive the one or more video feeds from the one or more cameras over a network. The network may be a local area network, a cellular network or a wide area network such as the internet. In embodiments, the device 110 may be located in a data centre and be based on the internet (sometimes referred to as "in the cloud") which allows the cameras 170A-170N to capture video from an event located in a completely different area to the location of the device 110.

In embodiments, the device 110 is configured to output a video feed as a program feed 140. The program feed 140 is, in embodiments, one of the video feeds selected from one of the cameras 170A-170N with an annotation generated. The annotation is generated based upon the content of the video stream as will be explained in detail hereinafter. In embodiments, the annotation is generated automatically and then, in embodiments, applied to one or more consecutive video frames in the video stream. In embodiments, the annotation is applied in real-time (or nearly real-time), which allows for real-time or near real time adding of supplemental information. In embodiments, the annotation is a graphic overlaid on one or more consecutive video frames in the video stream.

The term annotation in the following means a note added by way of further explanation of the video content. This note may be added to the video content as a graphic overlaid on a video frame in the video stream. The note may be added as audio content played along with the video stream. The audio content may be generated using a text-to-speech application or may be constructed from pre-recorded phrases spoken by a commentator. The note may also be added as a combination of a graphic overlaid on the video frame and audio content. In embodiments, the annotation is sent separately to the audio and video as a metadata stream. The annotation is then, in embodiments, applied as a caption, graphic or text to speech audio on the player on which the user consumes the media.

In embodiments, a user may control the device 110 using control signals 185. In embodiments, the user may control which one of the input video feeds is selected as a program feed to be output from the device 110. Again, the user may be located remote to either or both of the one or more cameras 170A-170N or the device 110. Whilst the device 110 may be controlled by a user as noted above, in embodiments, the user will not control the device 110 and instead the device 110 will itself select which input video feed is used as the program feed and so no control signals 185 will be required.

In embodiments, metric data 180 is provided to the device 110. Metric data 180 is data that the device 110 uses to apply the annotation to the selected video feed for output as the program feed 140. The metric data 180 may be provided by an external apparatus or service and may include metrics associated with an event being captured by the one or more cameras. There are numerous embodiments envisaged with various type of metric data as will become apparent. One embodiment has a team sheet added which provides a list of players and their corresponding squad numbers (the number on their shirt). In other words, the team sheet provides a link between a player's name and their shirt number as would be appreciated.

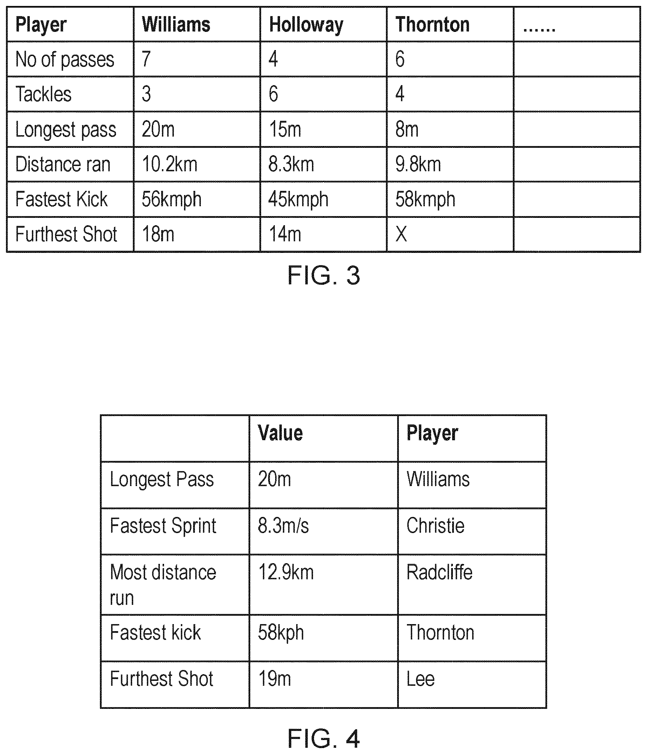

In embodiments, where the event is a sports event, the metric data may be data associated with the position of the players on the pitch, the position of the sporting projectile on the pitch (such as the position of the football in a soccer match), metrics about the match or one or more players (as will be explained in Figures 3 and 4), metrics derived from social media or the like. The metric data may be, in embodiments, provided by a sports analysis company such as Hawk-Eye Innovations TM. In addition, to the metric data 180, other graphic data 180 may be provided which provides various editing graphics to be ultimately applied to the video feed such as adverts, editing wipes, emblems or any kind of graphic to be displayed with the video feed.

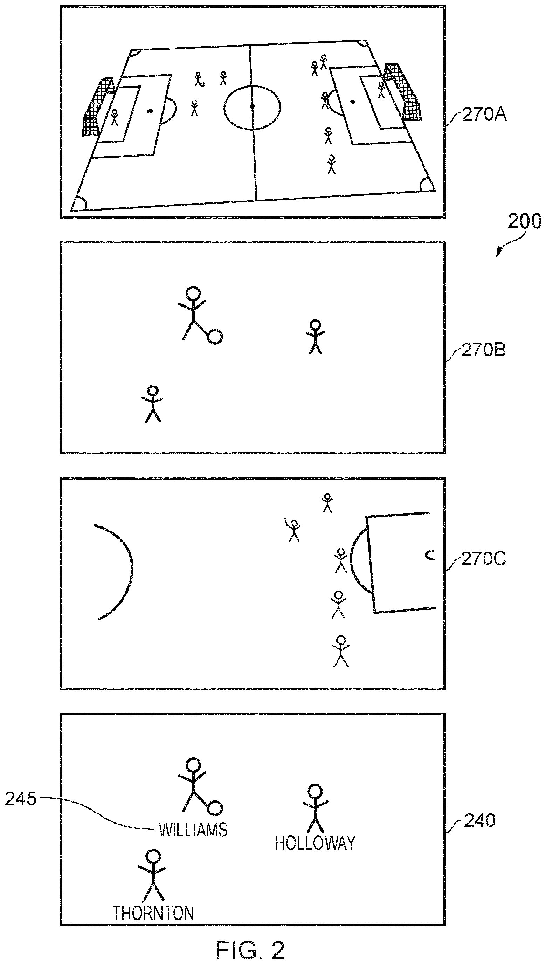

Figure 2 shows i) video feeds 270A-270C from the cameras in the system of Figure 1 and ii) a video stream output 240 from the device according to embodiments of the disclosure. In embodiments, the event captured by the one or more camera 170A-170N is a sporting event. Specifically, the sporting event is a soccer match although the disclosure is not so limited. As will be apparent, there are only 3 camera feeds in the embodiment of Figure 2, although the disclosure is not so limited and any number of video feeds is envisaged.

In a first video feed 270A, a first camera 170A is positioned to capture a wide angle view of the soccer match. Specifically, the wide angle view captures the entire soccer pitch. In a second video feed 270B, a second camera (not specifically noted in Figure 1) captures a close up view of the football and three players near the football. As will be appreciated, the football and the three players near the football are shown on the left side of the pitch in the first video feed 270A. A third video feed 270C is shown in Figure 2. The third video feed 270C is captured by a third camera (not specifically noted in Figure 1) and shows a close up view of the right side of the pitch. Accordingly, the third video feed 270C shows the right side of the pitch captured by the first camera 170A. It will be noted in the third video feed 270C that a player has his/her hand raised in the air. This is to attract the attention of the player under whose control the football is. In other words, the player with their hand in the air is calling for the player having possession of the football to pass to them.

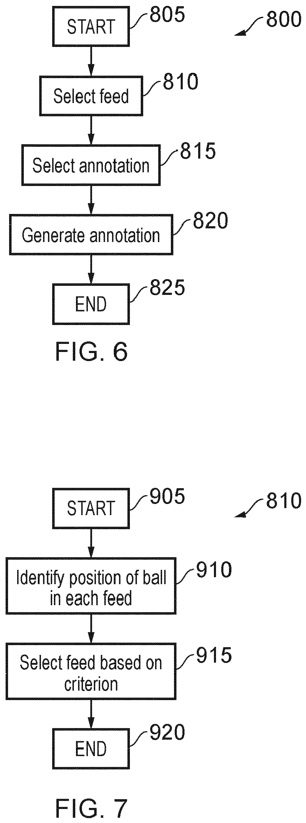

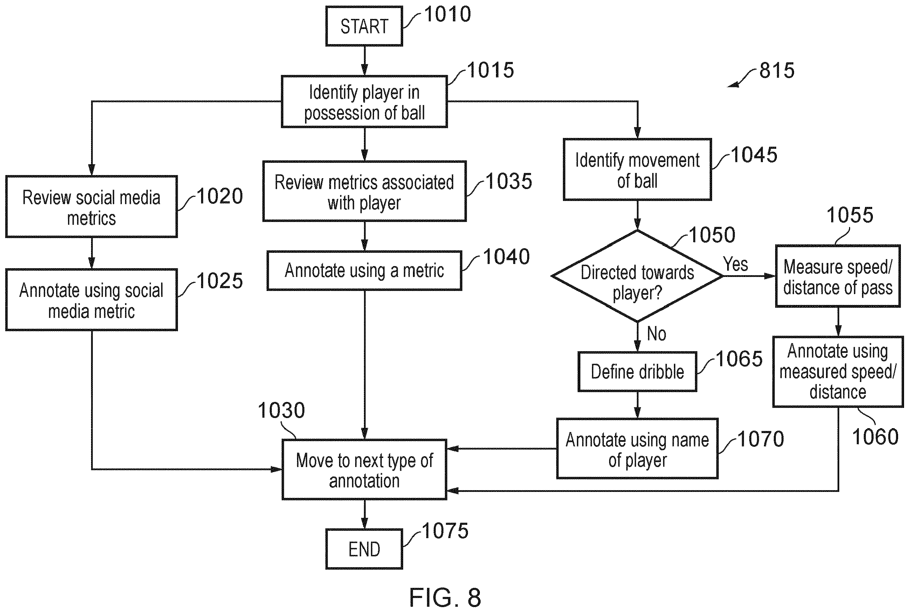

In addition, an output video feed 240 having a graphic applied is shown in Figure 2. Specifically, the output video feed 240 is the second video feed 270B with an annotation applied thereto. In embodiments, the annotation is a graphic that is applied to the second video feed 270B. In order to apply the graphic, the device 110 analyses the output video feed and selects the appropriate graphic to apply to the output video feed. In embodiments, the output video feed is selected by a user and the device selects the graphic to apply to the output video feed. However, the disclosure is not so limited and in embodiments, the device 110 may select which video feed to output. The process carried out by the device 110 to determine the graphic to be applied to the output video feed will be explained later with reference to Figure 7. Moreover, the process carried out by the device 110 to select which input video feed is to be used as the output video feed is explained with reference to Figure 8.

Returning to Figure 2, the annotation applied to the selected input video feed is a graphic. Specifically, the graphic is a caption 245 indicating the names of the players in the video feed. By placing the annotation of the identity of the player below the player in the output video feed, viewers who are hard of hearing can easily identify the players in the output video feed. This is because in a traditional televised soccer match, a commentator would provide audio commentary indicating which players are in shot. However, by placing the name of the player under the player, there is no need to listen to the commentary. This increases enjoyment for viewers who are hard of hearing and is an advantageous accessibility feature. Although the foregoing describes placing a name adjacent the player, the disclosure is not so limited and any graphical annotation pertaining to the player is advantageously inserted adjacent the player to increase enjoyment for viewers are hard of hearing.

In embodiments, the device 110 will identify the players in the video feed using facial recognition or number recognition. Specifically, the device 110 analyses the content of the output video feed and identifies the player using known facial recognition techniques or identifies the player using the number located on their shirt which is then be used to compare with received graphic data 180 which associates the player with their shirt number. Of course, although graphic data is mentioned here, it is envisaged that in embodiments the team sheet will be provided. This provides a link between the player's name and their shirt number as noted earlier.

The device 110 then automatically generates and ultimately applies the name underneath the player on the video feed. This is achieved by the device 110 identifying an area of grass underneath the player on the output video feed. In embodiments, the device 110 will adjust the size and placement of the name to avoid the name overlapping with another player, the ball or a line on the pitch. This is to reduce the likelihood of the football action being negatively impacted by the application of the annotation to the output video feed.

In the embodiments of Figure 2, the player in possession of the football is called "Williams" and the two other players are called "Thornton" and "Holloway". As can be seen from Figure 2, the output video feed has the name annotation applied underneath the players. However, as noted above, the disclosure is not so limited and the annotation may be audibly provided in the output audio stream. Of course, the annotation may be applied both as a graphic as in Figure 2 and audibly.

Figures 3 and 4 show tables explaining metrics used to annotate the video stream output from the device according to embodiments of the disclosure. The metrics are, in embodiments, fed to the device 110 via metric data 185. In particular, the metric data 185 is provided, in embodiments, by an external device or service. However, the disclosure is not so limited and it is possible that the metric data may be derived from the captured video feeds by the device. This metric data may be derived from the current event as explained below or may be based on historical data as will be explained later. In the instance that the metric data is derived from the captured video feeds of the current event, the real life distance associated with one pixel would need to be known for each camera. It is then possible to derive real life distances and speeds from the video feed as would be known and appreciated by the skilled person. In embodiments, the real-life distances are derived from the camera and lens metadata and the known geometry of the pitch. As would be appreciated, the real-life distances may be derived from the camera's resolution, the field of view of the lens, the position and direction of the camera and the geometry of the real-life scene.

As noted above, the metric data may be derived from historical data. In embodiments, the historical data may relate to the real-life event. For example, the historical data may include information relating to the previous matches between the two teams playing the soccer match such as previous goals scored or previous number of penalty kicks, previous possession maps which show where various players have been on the pitch during the match or the like. Moreover, the historical data may include information relating to incidents on the pitch. For example, if a player is taking a penalty kick, the metric data may include where the ball went in previous penalty kicks taken by the player or the success rate of the player. This may be overlaid on a shot of the goal prior to the kick being taken.

Referring to Figure 3, a table showing various metrics for each player on the pitch is shown. This information is, in embodiments, stored locally within the device 110 (in storage 130) and is updated periodically by the external apparatus or service. Of course, the disclosure is not so limited and the table in Figure 3 may be stored remotely to the device 110.

The information stored in the table shown in Figure 3 relate to each player. In other words, a number of metrics associated with each player are stored in the table. Specifically, the number of passes, number of tackles, the longest successful pass, the distance ran, the fastest kick and the distance of the furthest shot are all stored in association with each player. Other metrics may be additionally or alternatively provided. For example, the number of fouls, number of goals, number of headers or the like may be stored. Further, other metrics specific to various player positions may be stored. For example, metrics more suited to a goalkeeper such as number of saves may be stored and associated with the goal keeper in the team. In some instances, a player may not have performed a captured metric in which case an "X" appears in the table. In Figure 3, the player "Thomton" has not yet shot at goal (or his/her shot distance has not exceeded a threshold distance) and so no numerical value is stored.

Referring to Figure 4, a table noting the highest value metrics for a particular match is shown. In the table of Figure 4, the value of the highest value metric is stored in association with the name of the player having the highest metric. In the example of Figure 4, the metrics are the longest pass, the fastest sprint, the most distance run, the fastest kick and the furthest shot is stored. Of course, there are other metrics that may be stored in addition or alternatively to these metrics. It is envisaged that the highest value metrics may be shown for each team or across both teams for each match. In other words, the highest value metrics for each team may be stored in addition to or instead of the highest value metrics for both teams in a match. In a similar manner to that described in Figure 3, the table may be stored in device 110 or may be stored remotely. Further the information contained within the table may be provided by an external apparatus or service or may be derived from the video streams as explained in reference to Figure 3.

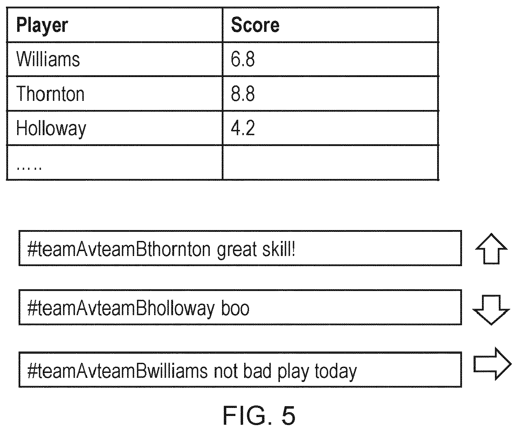

Referring to Figure 5, a table explaining a rating metric used to annotate the video stream output from the device according to embodiments of the disclosure is shown. The table of Figure 5 shows a score associated with each player. The value of the score indicates the level of performance displayed by a player during a match. In embodiments, the score shown is rated out of 10, with a higher score indicating a better performance. In embodiments, the score may be derived from social media feeds, but the disclosure is no way limited. For example, attendees at the match, or viewers paying a subscription fee to a service may be able to rate their player out of a score of 10. These results will be aggregated, such as a mean or median average score taken and this score is stored in the table of Figure 5.

In Figure 5, embodiments describing the derivation of the rating from social media posts are shown. In embodiments, social media posts are analysed by known text analysis techniques to determine whether a player has performed well or not according to social media users. In order for the social media post to be attributed to a particular player, an identifier linking the social media post to the performance of a player in a particular game is provided. In the embodiments shown in Figure 5, the identifier is a hashtag such as those used on many social media platforms such as Instagram ^{®}, Twitter ^{®} or the like. Specifically, the hashtag identifies the match (teamAvteamB) and the name of the player (Thornton/Holloway/Williams). Of course any kind of identifier is envisaged such as football club and player number as the time of posting the social media post will determine that the football match is occurring.

The text of the post is then analysed by an application such as bytesview ^{®} to determine the sentiment of the post. The sentiment of the post may be positive, negative or neutral. Examples of a positive post is shown with the up arrow, a negative post is shown with a down arrow and a neutral post is shown with a horizontal arrow. A positive post increases the player rating, a negative post reduces the player rating and a neutral post keeps the player rating at the current level. Of course, a social media user may provide a rating via any mechanism and the social media user may instead apply an emoji indicating his/her rating of a particular player's performance on a social media post.

In Figure 6 a flowchart 800 is shown explaining embodiments of the disclosure performed by circuitry within the device 110. The flowchart 800 starts in step 805. The process moves to step 810 where the output video feed is selected from the incoming video feeds. The process then moves to step 815 where the annotation to be generated for the output video feed (either visually, audibly or a combination of visually and audibly) is selected. The process then moves to step 820 where the selected annotation is output with the output video stream to be ultimately applied to the video stream. The process then ends in step 825.

As noted above, in embodiments, the video feed is selected by an operator in step 810 of Figure 6. However, the disclosure is not so limited and, in embodiments, the device 110 selects the output video feed from the input video feeds. This is described in Figure 7. It should be noted that, whilst the device 110 may automatically select the output video feed, in embodiments, the device 110 may suggest an output feed to an operator and it is the operator who makes the final selection of the output video feed. The selection of the output video feed may be made based upon end users' preferences such as duration of highlight package or a particular requirement to focus on one or two players in the match.

Although the foregoing describes the annotation being applied to the output video feed, the disclosure is in no way limited to this. In embodiments, the output video feed may be recorded without any annotation being output with the video feed. This recording may be the entire output video feed or a highlight package containing various clips from one or more of the video feeds captured by the cameras. During playback of the recorded video feed/highlight package, the annotation may be added to the playback of the recording. In other words, the annotation may be applied to one or more consecutive video frames during the playback of the recorded video stream.

In these embodiments, the one or more video stream being received is the recorded video stream or highlight package with no annotation applied. The annotation is then generated and output with the video stream and then ultimately applied to the recorded video stream or highlight package.

In embodiments, the annotations are applied to all or a subset of the input video feeds captured by the cameras. Specifically, the annotations may be generated and applied to the selected input video feeds and the output video feed is then edited from the input video feeds with annotations applied thereto.

In Figure 7, a flowchart explaining the selection of the output video feed in step 810 is shown. The process 810 starts at step 905. The process moves to step 910 where the position of the sporting projectile (such as football) is identified in each input feed. This is achieved using known object detection and recognition techniques. The process moved to step 915 where the output video feed is selected based upon one or more criterion.

In particular, the output feed may be selected based upon the position and/or size of the football in the video feed. Specifically, the output feed where the football is the largest size in the images of the video feed or where there is an uninterrupted view of the football may be appropriate criterion to select the video feed. Other criterion may include the position of the football in the shot such that the feed having the football in the most central position on the screen may be selected. There may be further criteria such as selecting the feed where there is a clear view of the football and most number of players around the football, or a shot where the football and the goal are in the same shot. The criterion or criteria used to select the most appropriate video feed will, in embodiments, be decided in advance by an editor of the program or the like. It will be appreciated that audio may be used to assist in the selection of the most appropriate output video feed.

After the output video feed is selected, the process ends in step 920.

Referring to Figure 8, a flowchart 815 describing the selection of the annotation is shown. Specifically, the annotation which is selected in the flowchart 815 relates to a player on the pitch. Obviously other annotations are envisaged which will be explained later and so the disclosure is not so limited.

The process starts at step 1010 and then moves onto step 1015 where the device 110 identifies the player who is in possession of the football in the output video feed. This is achieved using known object tracking and recognition techniques. In addition, other players also located in the output video feed may also be identified. The process then moves onto one of step 1020 or step 1035 or step 1045. The decision regarding which step will be next is made, in embodiments, in a "round-robin" manner. In other words, when the flowchart is first followed, the process will move to step 1020 after step 1015. Then, when the flowchart is followed for a second time, the process will move to step 1035 and when the flowchart is followed for a third time, the process will move to step 1045. By applying a "round-robin" mechanism, the annotations will vary over a period of time which will make the output feed more interesting to viewers.

Returning to step 1015, on the assumption that the flowchart is first followed, the process moves to step 1020. In this instance, the social media metrics for the player in possession of the football are retrieved from the table described in Figure 5. Moreover, the social media metrics for other players in the video feed may also be retrieved.

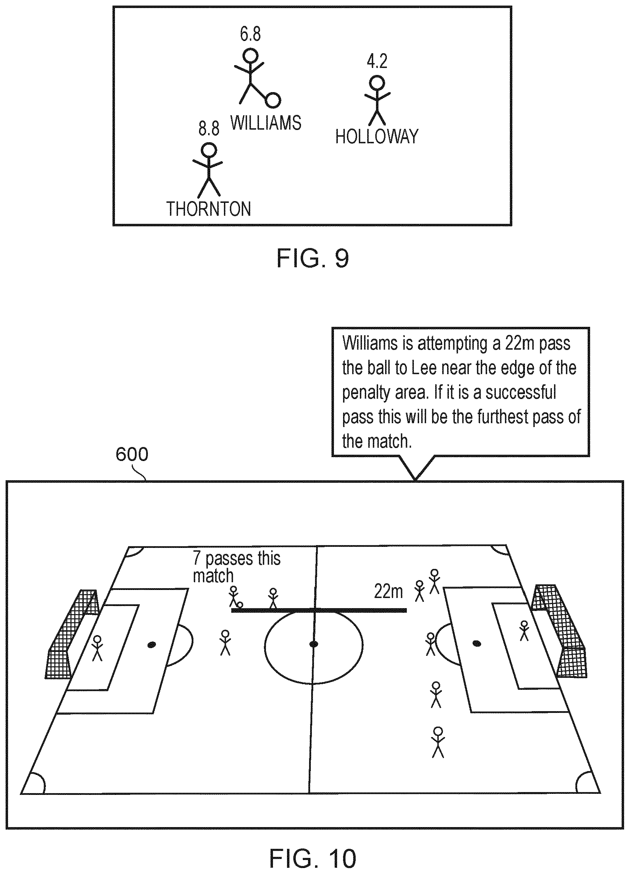

The social media metrics are then selected to annotate the output video feed. Figure 9 illustrates the annotation of the output video feed with the social media metrics. Although Figure 9 shows a graphical annotation of the output video feed, the disclosure is not so limited and an audio annotation may be provided in addition to or instead of a graphical annotation. An example of an audio annotation is "Williams is in possession of the ball. He has a social media rating of 6.8".

As will be apparent from Figure 9, the graphical annotation is placed in a part of the image where there is no overlap with a player or the football (similar to the insertion of the player's name into the video feed). Moreover, other features may be displayed in addition to or instead of the social media metric. An emoji may be inserted which indicates whether the player in the output video feed is playing better than the average score attributed to players, or which indicates whether social media users feel the player is performing better or worse (so called "trending").

After selection, the output video feed is annotated using the social media metric in step 1025. This is the output video stream shown in Figure 9.

The process then moves to step 1030, where the next annotation in the "round robin" will be selected for the next time the flow chart of Figure 6 is run through. The process then ends in step 1075.

Assuming the flowchart 815 is followed again, the "round robin" will move from step 1015 to step 1035.

In step 1035 the metrics associated with each player is reviewed. In other words, the metrics associated with one or more identified players in the shot is reviewed. These metrics are shown and explained with reference to Figures 3 and 4.

The process moves to step 1040 where the annotation is generated and output with the annotation. In embodiments, the output video feed is annotated to include the metric. One or more of these metrics may be inserted as a graphic into the output video feed.

In embodiments, one or more of the metrics may be audibly output in a predefined phrase either instead of or in addition to the graphic. For example, the predefined phrase is "<PLAYER> is currently in possession of the football. <PLAYER> has performed <NUMBER OF PASSES> this match.". The value of <PLAYER> will be determined from the output video feed using number or facial recognition as explained above and the value <NUMBER OF PASSES> will be taken from the table of metrics shown in Figure 3. In other words, the audible annotation is constructed from predefined phrases and at least one metric associated with the real life event. This is advantageous because a professional commentator may be able to record the predefined phrase and certain metric values which are then selected by the device 110. This allows the audible annotation to be realistic.

In embodiments, the selection of the metric may be determined by the action being performed by the player or may be selected based upon the last time that metric was communicated to the viewer. For example, where a metric for a particular player has not been used for a predetermined time, that metric may be selected. Alternatively, again the metric may be selected in a "round robin" manner.

In the instance that the metric is inserted as a graphic, the metric may be inserted into a suitable location within the output video feed. This suitable location may include a location where there is no overlap with a player or the football. This is shown in Figure 10 where "7 passes this match" is inserted above the player in possession of the football.

The process then moves to step 1030 where the next annotation in the "round robin" will be selected for the next time the flow chart of Figure 8 is run through. The process then ends in step 1075.

Assuming the flowchart 815 is followed again, the "round robin" will move from step 1015 to step 1045.

In step 1045, the movement of the football is identified. In embodiments, this is achieved by performing object detection and recognition on the output video feed. Once the movement of the football is identified, the direction of the movement of the football is defined in step 1050. In step 1050, the device 110 determines if the football is being passed to a different player to the player in possession of the football. If the football is not being passed to a different player, the "no" path is followed to step 1065. In this instance, a dribble is defined as the football is moving under the possession of the player. The process moves to step 1070. In this instance, the output video feed is annotated using the name of the player in possession of the football. This is because the player retains possession of the football. Again, in embodiments, this annotation may be a graphic inserted into the output video stream or may be audibly inserted into the output video stream. The process then moves to step 1030 where the next annotation in the "round robin" will be selected for the next time the flow chart of Figure 8 is run through. The process then ends in step 1075.

Returning to step 1050, in the event that the movement of the football is being passed to a different player, the "yes" path is followed. The process then moves to step 1055 where the speed and/or distance of the attempted pass is measured. This may be achieved from metric data 185 received from the external apparatus or the external service or from the output video feed or from analysis from one or more of the input video feeds.

The output video feed is, in embodiments, annotated using the measured speed and/or distance in step 1060. Again, this annotation may be a graphic annotation inserted into the output video feed or may be an audible annotation or a combination of graphic and audible annotation. An example annotation is shown in Figure 10, where the first input video feed is used as the output video feed. In this example, the football is passed to a player with his/her hand aloft. The position of each player (the player in possession of the football and the player with his/her hand aloft) is determined from the metric data 185 as being 22m. Therefore a graphic is applied to the output video feed indicating the distance between the two players as being 22m. In addition, in the example of Figure 10, an audible annotation is also added to the output video feed.

It is possible to identify the player in possession of the football and the player with his/her hand aloft using facial or number recognition. The location of the player with his/her hand aloft is also provided from the metric data 185. This allows the relative position of each player to be determined. Moreover, this relative position of the player on the pitch can be derived from the output video stream or from one or more of the input video feeds. The distance of the attempted pass may be determined from the movement of the football (i.e. the speed and direction of the football) shortly after the pass is attempted. This information can be compared to the table of metrics shown in Figure 4. In this case, the attempted pass is further than the longest pass stored in the table. Accordingly, it is possible to automatically annotate the output video feed with the audible commentary "Williams is attempting a 22m pass the ball to Lee near the edge of the penalty area. If it is a successful pass this will be the furthest pass of the match.".

The process then moves to step 1030 where the next annotation in the "round robin" will be selected for the next time the flow chart of Figure 6 is run through. The process then ends in step 1075.

It should be noted that although the above embodiments describe selecting the output video feed of the same event, the disclosure is not so limited. In embodiments, the input video feeds may be of one or more different sporting events and the selection of the output video feed may mean switching to a video feed from a different event or switching to a time delayed video feed from a different event that occurred concurrently with the event being output. For example, during an event such as the Olympics, many concurrent sporting events occur. In this instance, the event being shown in the current output video feed may be at a break or may not be interesting. Accordingly, the output video feed may be changed to a different event that has more interest to the viewer. In this case, the output video feed may be selected based upon the noise of the crowd captured by microphones in the event or by movement within the input video stream.

Although the metrics have been described as being metrics associated with the players' performance in the event, the disclosure is not so limited. In embodiments, a metric may be information relating to a particular player, or to a particular sport being the subject of the output video feed. For example, in the situation where a sporting event has a superstar playing, information relating to the wealth or a news worthy fact about the individual may be selected as the metric. Similarly, pertinent facts about the sporting venue, or rules associated with the sporting event may be deemed suitable metrics to annotate the output video feed.

Although the foregoing describes the use of a "round robin", the disclosure is in no way limited to this. For example, the selection may be made randomly or using any appropriate mechanism as would be envisaged.

The above embodiments have been described in respect of the decisions being made to select the output video feed and the annotation according to the flow charts of Figures 7 and 8. However, the disclosure is not so limited. In embodiments, the selection of the output video feed and/or the annotation may be made using Artificial Intelligence.

In order to train the artificial intelligence, a data set must be selected. In embodiments, the data set may be a plurality of input video streams and the corresponding output video stream as selected by a human operator. This will allow the artificial intelligence to be trained on the type of output video feeds a human operator would select given the plurality of input video feeds. In order for the artificial intelligence to be trained, the input video feeds and the output video feed would need to be synchronised so that the artificial intelligence will be able to perform image recognition to identify which input video feed is selected as the output video feed. In embodiments, the associated audio stream for each input video stream will also be provided so that the artificial intelligence can identify any audio cues.

Similarly, the artificial intelligence may be used to select the annotation to be applied to the output video feed. In order to achieve this, the artificial intelligence will need to be trained using an annotated output video stream. This training will require the output video feed without annotation, the metrics available to the operator and the output video stream with annotations applied. In embodiments, the annotations may be audio annotations such as match commentaries from existing match recordings. This information can be used to train an artificial intelligence system to determine the criteria used by a human operator when deciding the annotations to be applied to an output video stream.

In embodiments, a human operator may train the artificial intelligence system as he/she is manually selecting the output video feed and/or selecting the annotation. This is a known technique and is sometimes referred to as Reinforcement Learning from Human Feedback.

Although the foregoing describes the annotation being generated for the content in the output video feed, the disclosure is not so limited. In embodiments, the transition itself from one video feed to another may be the annotation. In embodiments this annotation may be a graphic inserted into the output video feed such as an editing transition like a dissolve which involves a gradual change to the visibility of the video feed. In embodiments, the graphic may explain to the viewer that the transition is to a different sport, a different player within the event being captured, an earlier incident within the event being captured, a slightly delayed version of the event being captured, a highlight package associated with the event being captured or the like. In other words, the annotation may be a transition where the output video feed is transitioned from one input video feed to a different input video feed from the event being captured or a different event or highlight package. Moreover, the content of the video stream which will be output (i.e. the video stream which is being transitioned to) will determine the annotation to be applied. For example, annotation may explain (either visually using a graphic or audibly) the real-life event being transitioned to such as the sport being transitioned to or some other information associated with the content, for example the player being transitioned to.

### Further Embodiments

Although embodiments of the disclosure describe automatically annotating an output video stream, the disclosure is not so limited. Other embodiments are now described.

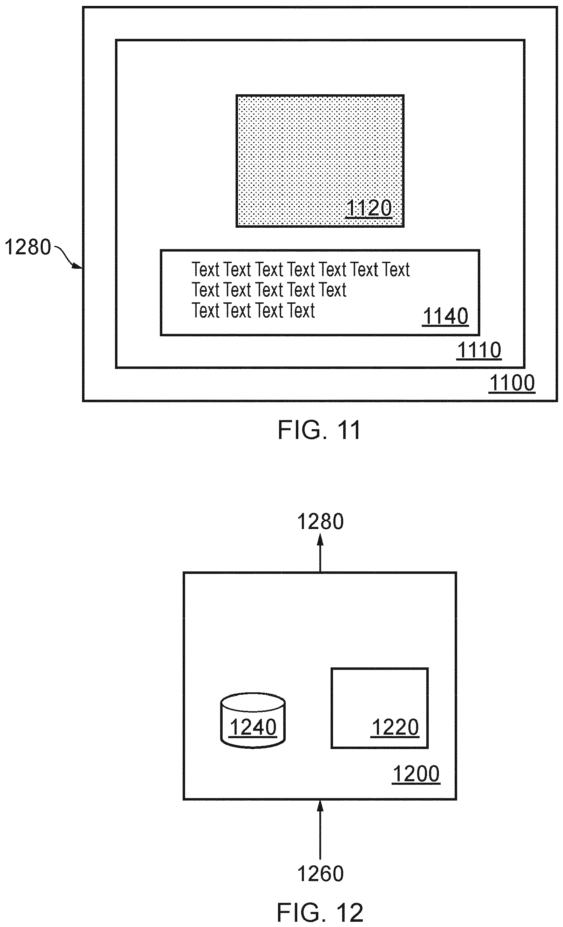

Figure 11 shows a webpage 1110 which is provided on a display 1100. The webpage 1110 is provided from the server of Figure 12 via communication channel 1280. Within the webpage, textual content 1140 is displayed along with an image 1120 which is relevant to the textual content. This image may be a still image such as a photograph or may be video footage which is relevant to the textual content. For example, the textual content may be news story describing an event such as a sports event or another newsworthy event such as a natural disaster. Typically, the webpage is a news website which produces the textual content, but usually does not own the Intellectual Property Rights in the image.

In order to ensure that the Intellectual Property Rights of the owner of the image are not infringed, the image displayed on the webpage must be selected from a predetermined number of images or videos. The predetermined images are all licenced from the image rights holder. However, the licensing arrangements for the images are complicated. For example, a photograph or video capturing just a sports star will, in some situations, need a licence from the sports star him or herself whereas a photograph or video capturing a sports star and one or more team mate will need a licence from the team. Great care is required to make sure a suitable image is selected which complies with licensing agreements. Therefore, it is difficult to quickly provide suitable images for a webpage that comply with licensing agreements.

Figure 12 shows a server 1200 which is used to host the webpage 1110. The webpage 1110 is provided to a client device such as the display 1100 of Figure 11 via communication channel 1280. The server 1200 receives information via input channel 1260. The input channel 1260 allows textual content and images to be provided to the server 1200. The server 1200 contains circuitry 1220 that is configured to perform embodiments of the disclosure. This circuitry 1220 may be semiconductor circuitry configured to operate under the control of software. In Figure 12, the circuitry 1220 includes a processor that operates under the control of software that is stored in storage 1240. The software contains computer readable instructions which, when loaded onto the processor configures the processor to perform a method according to embodiments. The storage 1240 may be any kind of suitable storage 1240 such as solid-state storage or optically readable storage.

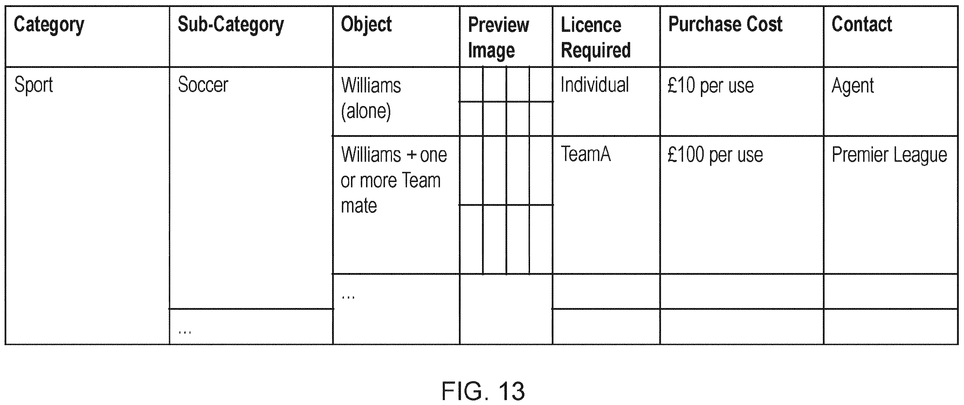

The information provided by the input channel 1260 includes the textual content 1140. Further, the images from which the image 1120 is selected will also be provided over the input channel 1260 and these are stored in the storage 1240. In addition, a database as set out in Figure 13 is stored in the storage 1240. Accordingly, this database is provided over the input channel 1260. Of course, the disclosure is not so limited and the database may be stored remotely to the server 1200. Moreover, it will be appreciated by the skilled person that the images from which image 1120 is selected may be stored separately to the server 1200. In these embodiments, the server 1200 will communicate with the database and will retrieve the relevant image(s) from storage.

Figure 13 shows the database stored in storage 1240. The purpose of the database is to associate an object identified from the text with an appropriate licence. Moreover, the database provides information relating to the purchase of an appropriate licence should the author of the webpage not have an appropriate licence.

The database has the objects in the images categorised by "category" and "sub-category". This allows easy retrieval of the specific licence information relating to the object. In the embodiments of Figure 13, the category is "sport" and the sub-category is "soccer". Of course, the disclosure is not so limited and any appropriate categorisation is envisaged.

In the object list, one of the players from the soccer match explained above is identified. Specifically, the player "Williams" is noted. Next to the object are preview images. This allows the editor of the webpage to select the most appropriate image to be inserted into the webpage. Of course, the disclosure is not so limited and an automatic selection may be used based upon image analysis such as facial recognition, size of face, whether it is an action shot of the object or the like.

The licencing associated with "Williams" is complicated. For example, where "Williams" is in an image on his or her own, the licence is an individual licence and may be held by Williams' agent. In other words, image rights associated with "Williams" will need to be licenced from Williams' agent (who will have an agreement with Williams to pay a percentage of licence revenue). In addition, the purchasing details for the licence are provided. In the embodiments of Figure 13, the purchase cost and the contact are defined. Moreover, the contact information for the licence is also provided. In this instance, the author of the webpage may contact the licensor to obtain a licence, or may check to establish whether the author of the webpage already has a licence with the author. In other words, the author of the webpage may have an existing licence to use images of the player and a check will be carried out prior to purchasing a further licence.

In the situation where the images have Williams and one or more additional player from TeamA, a licence needs to be obtained from TeamA. This is because the image rights associated with a plurality of players belong to TeamA. TeamA has an agreement with each player and so the image rights payment can be distributed amongst the players and the TeamA according to a licence agreement. In this instance, the contact information is the English Premier League ^{®}. Again, the author of the webpage may have an existing licence to use images of the player and a check will be carried out prior to purchasing a further licence.

In embodiments, the person or company uploading the images to the database will populate the database with details of the licencing arrangements. Additionally, the person or company uploading the images to the database will summarise the content of the image as metadata. This metadata is stored in association with the image and ensures the database correctly categorises the image. For example, the metadata may indicate the object or objects shown within the image and may provide other information such as the location or date and/or time of capture of the image. This allows the most relevant images to be displayed to the author of the webpage.

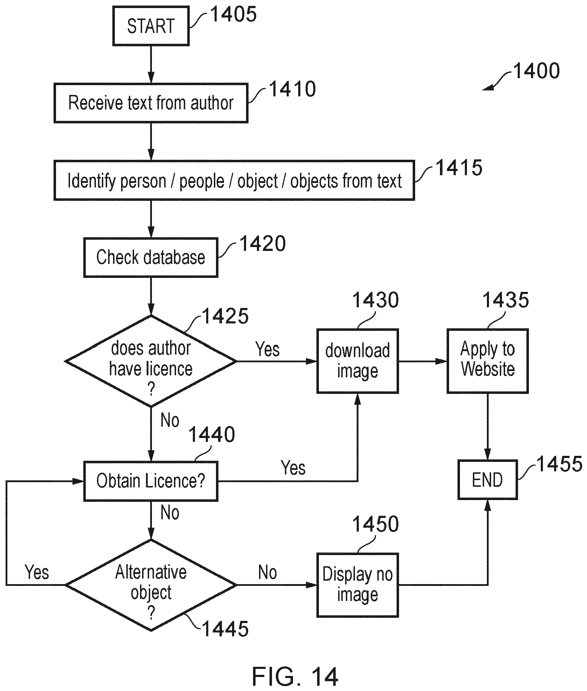

Figure 14 shows a flowchart 1400 explaining embodiments of the present disclosure. The process starts at step 1405. The process then moves to step 1410 where the text written by the author is provided to the server 1200. This text may be a caption for the desired image or video which is to be included in the website or may be the text of the article to be published on the website. The process then moves to step 1415 where the text is analysed.

In embodiments, the text is analysed using an Artificial Intelligence (AI) application. The AI application is trained on a dataset that includes many previous articles written for the website and the corresponding images selected for the article by a human editor. The images in the training set will include metadata similar to the object stored in the database of Figure 13 so that the AI application understands which objects are selected for various types of article written for the website. By analysing the text using the AI application, one or more objects are identified as being relevant to the content of the written article. For example, if the article relates to the televised soccer match, the player on the ball, Williams, may be mentioned in the article as a scorer of the winning goal or the like. Other context may be obtained from the text. For example, if Williams scored the winning goal using a header, this information may be extracted and used to interrogate the database. The process moves to step 1420 where the database is interrogated. In embodiments, the object extracted from the text by the AI application is provided to the database. Additionally, any contextual data is provided such as that Williams scored a headed goal. In embodiments, the contextual data is used to filter the images returned to the user so that only headed goals of Williams is shown.

In embodiments the images are ordered to assist the person selecting the images. Specifically, the images are ordered such that the most applicable image is provided at the top of the list. In embodiments, the images may be ordered so that the predicted most popular image is at the top of the list. This prediction may be carried out according to [1]. Of course, the disclosure is not so limited and the images may be ordered in any particular manner.

After the user has selected an image, the process moves to step 1425 where a check is made to see if the author already has a licence required to use the image. In the event that the user does have a licence, the "yes" path is followed to step 1430 where the image is downloaded. The user checks the image and confirms that the image is to be used and the image is applied to the website in step 1435. The process moves to step 1455 and ends.

Returning to step 1425. In the event that the user does not have a licence, the "No" path is followed to step 1440. In step 1440 a check is made to see if a licence may be obtained. For example, the author may need to confirm that he or she is happy to pay the requisite licence fee. In the event that the author is happy to pay the licence fee, the "yes" path is followed to step 1430 and the process resumes as explained above. Alternatively, if the author is not happy to obtain the licence, the "no" path is followed to step 1445 where either an alternative object is selected for the article or an alternative image of the object is selected. In the event that the user selects an alternative object or image, the "yes" path is followed to step 1440 where the process resumes. Alternatively, in the event that no alternative is selected, the "no" path is followed to step 1450 where no image is displayed to accompany the article. The process ends in step 1455.

Although the foregoing has described the objects as being images, any content such as audio or video is envisaged.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can be generally described by the following numbered clauses:
1. A device for outputting a video stream comprising:
   circuitry configured to:
   receive one or more video streams of a real life event;
   select one of the one or more video streams;
   automatically generating an annotation for the selected one video stream based upon the content of the selected video stream; and
   output the annotation with the selected one of the one or more video streams.
2. A device according to clause 1 wherein the annotation is a graphic overlaid on a one or more consecutive video frames in the selected one of the one or more video streams.
3. A device according to clause 1, wherein the annotation is output separately to the selected one of the one or more video streams.
4. A device according to clause 3, wherein the annotation is textual and inserted into an associated metadata stream.
5. A device according to clause 1 wherein the annotation is an audible annotation for playback with the selected one of the one or more video streams.
6. A device according to any preceding clause, wherein the annotation is based upon a metric associated with the real life event.
7. A device according to clause 6, wherein the real life event is a sporting event.
8. A device according to clause 7, wherein the annotation is a graphic and the circuitry is configured to insert the graphic adjacent a player in the sporting event, wherein the graphic pertains to the player.
9. A device according to clause 8, wherein the graphic pertains to a player's performance during the sporting event.
10. A device according to clause 5, wherein the circuitry is configured to construct the audible annotation from predefined phrases and at least one metric associated with the real life event.
11. A method for outputting a video stream comprising:
   receiving one or more video streams of a real life event;
   selecting one of the one or more video streams;
   automatically generating an annotation for the selected one video stream based upon the content of the selected video stream; and
   outputting the annotation with the selected one of the one or more video streams.
12. A method according to clause 11 wherein the annotation is a graphic overlaid on a one or more consecutive video frames in the selected one of the one or more video streams.
13. A method according to clause 11, wherein the annotation is output separately to the selected one of the one or more video streams.
14. A method according to clause 13, wherein the annotation is textual and inserted into an associated metadata stream.
15. A method according to clause 11 wherein the annotation is an audible annotation for playback with the selected one of the one or more video streams.
16. A method according to any one of clauses 11 to 15, wherein the annotation is based upon a metric associated with the real life event.
17. A method according to clause 16, wherein the real life event is a sporting event.
18. A method according to clause 17, wherein the annotation is a graphic and the circuitry is configured to insert the graphic adjacent a player in the sporting event, wherein the graphic pertains to the player.
19. A method according to clause 18, wherein the graphic pertains to a player's performance during the sporting event.
20. A method according to clause 15, comprising constructing the audible annotation from predefined phrases and at least one metric associated with the real life event.
21. A computer program comprising computer readable instructions which, when loaded onto a computer, configures the computer to perform a method according to any one of clause 11 to 20.

### References

[1] 'Intrinsic Image Popularity Assessment' - Keyan Ding, Kede Ma, Shiqi Wang - Conference 19, October 2019, Nice, France https://arxiv.org/pdf/1907.01985.pdf

## Claims

1. A device for outputting a video stream comprising:
circuitry configured to:
receive one or more video streams of a real life event;
select one of the one or more video streams;
automatically generating an annotation for the selected one video stream based upon the content of the selected video stream; and
output the annotation with the selected one of the one or more video streams.

2. A device according to claim 1 wherein the annotation is a graphic overlaid on a one or more consecutive video frames in the selected one of the one or more video streams.

3. A device according to claim 1, wherein the annotation is output separately to the selected one of the one or more video streams.

4. A device according to claim 3, wherein the annotation is textual and inserted into an associated metadata stream.

5. A device according to claim 1 wherein the annotation is an audible annotation for playback with the selected one of the one or more video streams.

6. A device according to claim 1, wherein the annotation is based upon a metric associated with the real life event.

7. A device according to claim 6, wherein the real life event is a sporting event.

8. A device according to claim 7, wherein the annotation is a graphic and the circuitry is configured to insert the graphic adjacent a player in the sporting event, wherein the graphic pertains to the player.

9. A device according to claim 8, wherein the graphic pertains to a player's performance during the sporting event.

10. A device according to claim 5, wherein the circuitry is configured to construct the audible annotation from predefined phrases and at least one metric associated with the real life event.

11. A method for outputting a video stream comprising:
receiving one or more video streams of a real life event;
selecting one of the one or more video streams;
automatically generating an annotation for the selected one video stream based upon the content of the selected video stream; and
outputting the annotation with the selected one of the one or more video streams.

12. A method according to claim 11 wherein the annotation is a graphic overlaid on a one or more consecutive video frames in the selected one of the one or more video streams.

13. A method according to claim 11, wherein the annotation is output separately to the selected one of the one or more video streams.

14. A method according to claim 13, wherein the annotation is textual and inserted into an associated metadata stream.

15. A computer program comprising computer readable instructions which, when loaded onto a computer, configures the computer to perform a method according to claim 11.
